# EUROPEAN PATENT APPLICATION

(11) **EP 1 760 021 A2**
(43) Date of publication of application: **07.03.2007**
(21) Application number: 06009734.2
(22) Date of filing: 11.05.2006
(51) Int. Cl.: B65H 37/04, B65H 45/08, D06H 5/00, B29C 65/50, B29C 65/10, A41D 27/24, A21C 5/00

(54) **Apparatus for hemming tridimensional, textile fabric articles of manufacture and method therefor**

(30) Priority: 29.08.2005 IT MI20051610
(71) Applicant: MACPI PRESSING DIVISION S.P.A., 25036 Palazzolo Sull'Oglio BS (IT)
(72) Inventor: Cartabbia, Giovanni, 25036 Palazzolo sull'Oglio (Brescia) (IT)
(74) Representative: Cicogna, Franco

(57) **Abstract**

An apparatus for hemming tridimensional textile fabric articles of manufactures and in particular bras, comprises a first machine (1) for applying an adhesive strip (22) on an edge of a fabric material (24), at a variable distance from a reference element, and a second machine (2) for folding and sealing the fabric material portion on which the adhesive has been applied.

The method to be carried out by the apparatus comprises the following steps: a first step of applying an adhesive strip at a fixed distance, but with a variable size, to the free fabric material, by flush cutting the latter; the adhesive being located with its paper support (23) according to the fabric piece shape; a second step of detaching the paper material (23) from the adhesive and trimming the assembly; and a third folding step for folding the textile portion with the adhesive applied thereto and seaming it on the portion to be hemmed.

## Description

### BACKGROUND OF THE INVENTION

The present invention relates to an apparatus for hemming tridimensional textile fabric articles of manufacture and a method therefor.

The apparatus and method herein disclosed has been specifically designed for hemming loose cups of bras, and finished bras, in a finishing and hemming operation.

More specifically, the present invention relates to an apparatus for hemming tridimensional textile fabric articles of manufactures comprising a plurality of fabric layer, as it occurs, for example, in making bra cups and finished bras.

The latter, as is known, generally comprise a laminated material, including a fabric portion and a foamed plastic material portion or a felt material portion, or other support materials.

The above mentioned articles of manufacture are laminated and thermoformed thereby assuming a tridimensional shape which, in bra cups or in bras, must fit the woman breast wearing the finished articles of manufactures.

The above mentioned tridimensional laminated material, must be coated by a fabric material proper and then subjected to several hemming operating steps which require to perform specifically designed processing operations, to be carried according to a set time sequence.

### SUMMARY OF THE INVENTION

Thus, the aim of the present invention is to provide an apparatus and method adapted to improve the production yield of tridimensional textile fabric articles of manufactures and, in particular, to allow a finishing and hemming operation on loose bra cups or on finished bras to be easily performed.

Within the scope of the above mentioned aim, a main object of the invention is to provide such an apparatus and method allowing to make an article of manufacture having very good aesthetic features.

Another object of the present invention is to provide such an apparatus and method which are very reliable and safe for an operator.

According to one aspect of the present invention, the above mentioned aim and objects, as well as yet other objects, which will become more apparent hereinafter, are achieved by an apparatus for hemming tridimensional textile fabric articles of manufactures, in particular bras, characterized in that said apparatus comprises a first adhesive applying machine for applying an adhesive strip on an edge of a textile fabric material, at a variable distance from a reference mark with a cutting of an exceeding textile fabric material, and a second machine for folding and sealing that portion of the textile fabric material on which said adhesive strip has been arranged.

According to a further aspect of the present invention, the above mentioned aim and objects, are further achieved by a method to be performed in the inventive apparatus, characterized in that said method comprises the following steps: a first applying step of an adhesive strip at a fixed distance, but of variable size, to a textile fabric material piece, and flush cutting said textile material piece; applying an adhesive supported by a paper support according to the fabric material piece shape; a second detaching step for detaching the paper support from the adhesive proper and trimming an end portion thereof; and a third folding step for folding the textile portion provided with the adhesive material and sealing it on the portion to be hemmed.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example, in the accompanying drawings, where:
Figure 1 is a perspective view of a machine for applying an adhesive strip on an edge of a textile fabric material, which applying machine constitutes a main part of the apparatus according to the invention;
Figure 2 is a perspective view, on an enlarged scale, showing in a detailed manner the applying machine of figure 1;
Figure 3 is a further perspective view of the machine shown in figure 2, and illustrating a first operating step comprising a supplying of an adhesive strip;
Figure 4 is a further perspective view of the machine shown in figure 3, and illustrating a subsequent operating step;
Figure 5 is a further perspective view of the machine shown in figure 4, and illustrating yet another subsequent operating step;
Figure 6 is a further perspective view of the machine shown in figure 5, and illustrating yet another operating step;
Figure 7 is a perspective view of a textile fabric material folding and sealing machine, also constituting a main part of the apparatus according to the present invention;
Figure 8 is a perspective view showing an opposite side of the machine shown in figure 7;
Figure 9 is a further perspective view of the machine shown in figure 8, and illustrating a first operating step;
Figure 10 is a further perspective view of the machine shown in figure 9, and illustrating yet another operating step;
Figure 11 is a further perspective view of the machine and illustrating yet another operating step;
Figure 12 is a further perspective view of the machine shown in figure 11, and illustrating yet another operating step;
Figure 13 is a schematic cross-sectional view of a textile fabric material edge applied to a support and including an adhesive strip with a protective paper material;

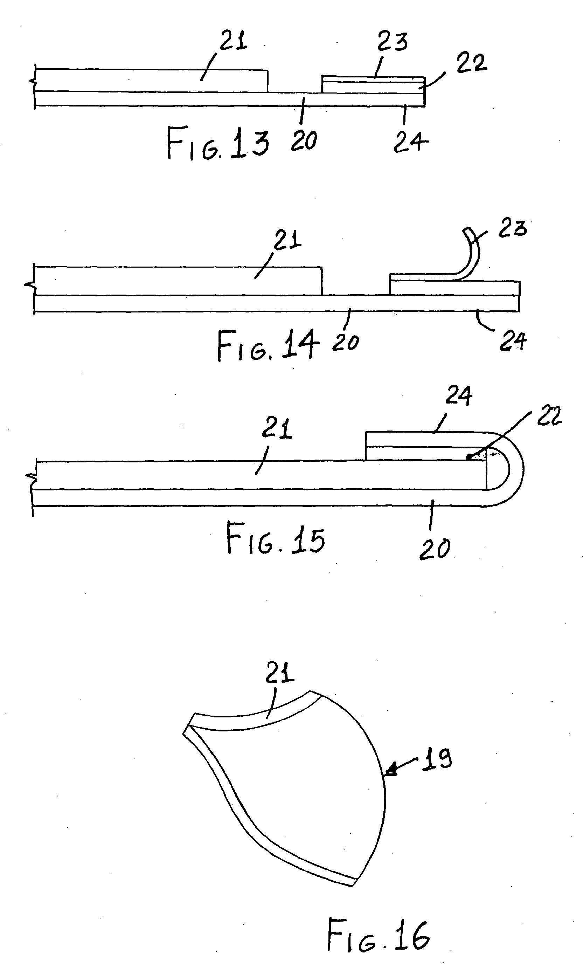

Figure 14 is a view similar to figure 13, but illustrating a detaching step for detaching the protective paper material;
Figure 15 is a schematic view, similar to figure 14, and illustrating an edge folded on the support; and
Figure 16 is a perspective view of the hemmed support.

### DESCRIPTION OF THE PREFERRED EMBODIMENTS

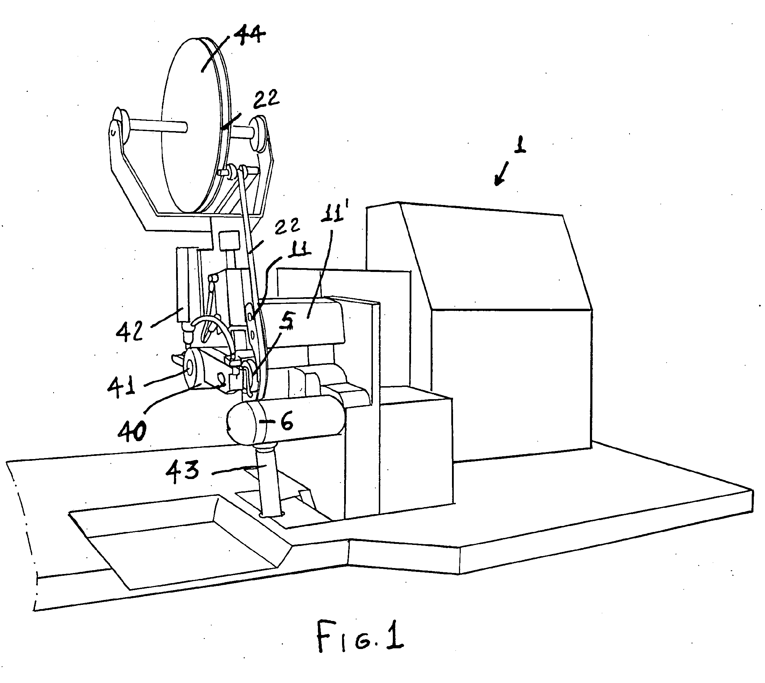

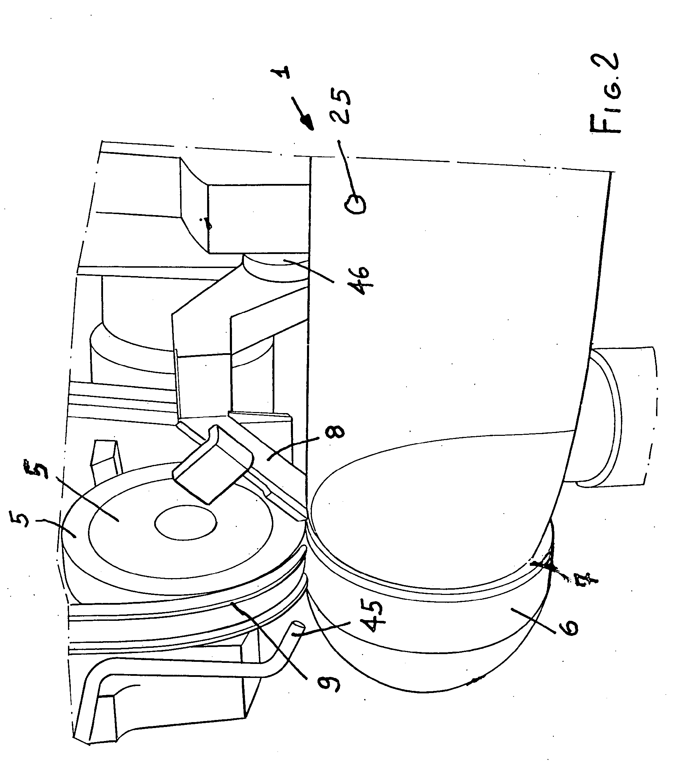

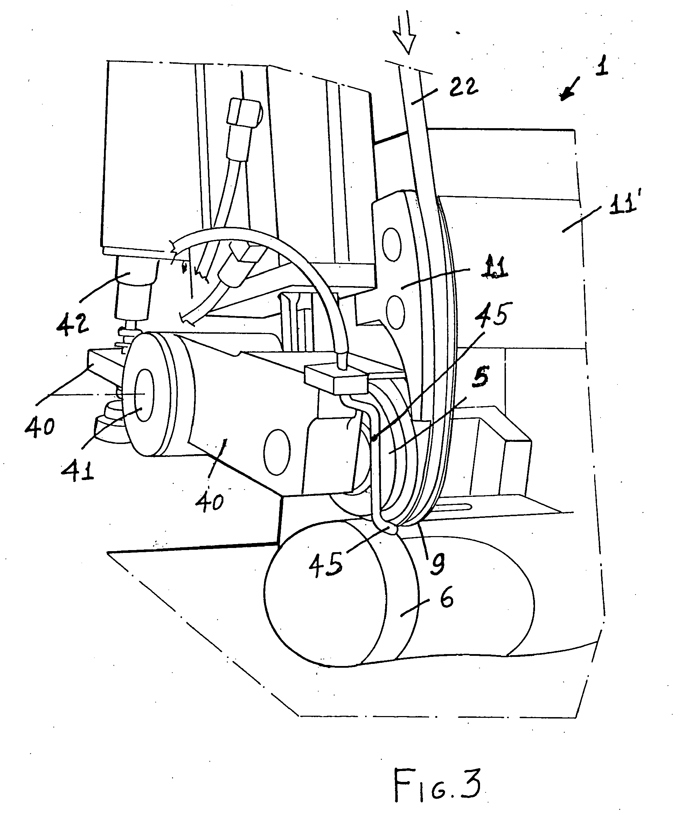

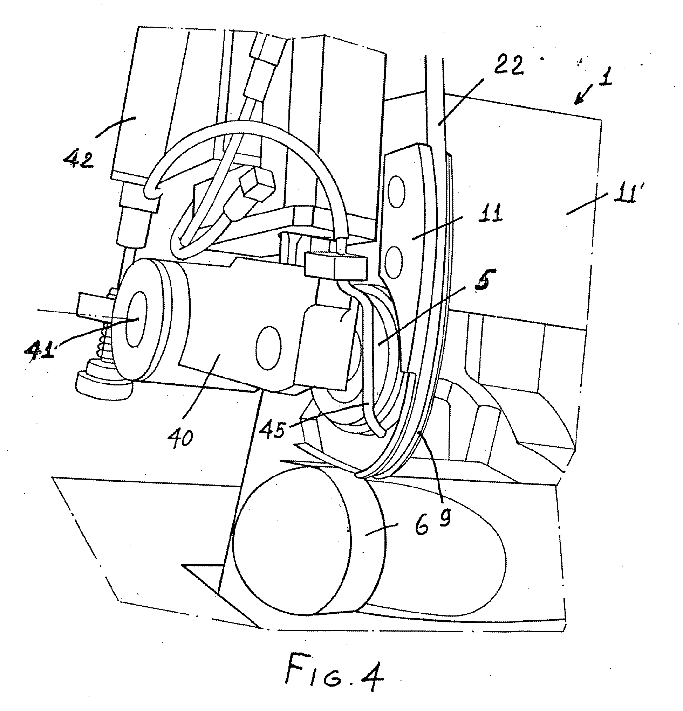

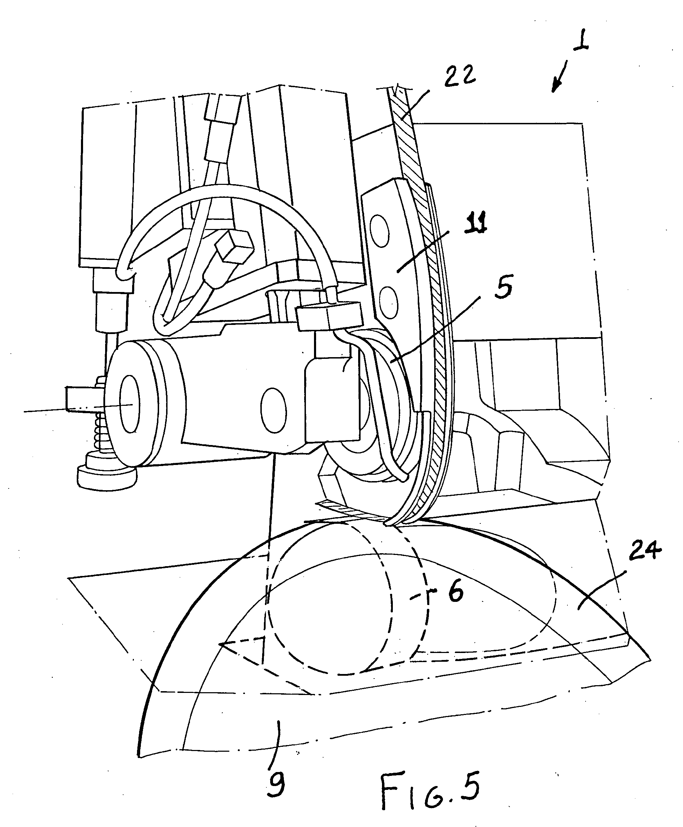

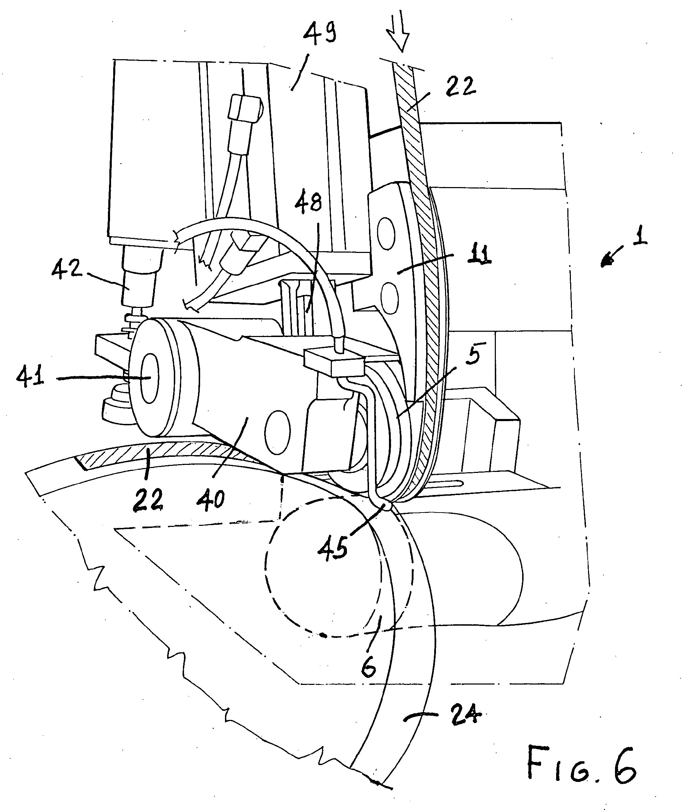

With reference to the number references of the above mentioned figures, the apparatus, according to the present invention, comprises a first machine for applying an adhesive strip on an edge of a textile fabric material at a variable distance from a reference mark, with a cutting of the exceeding textile fabric material; said machine being shown in figures 1 to 6 and generally indicated by the reference number 1.

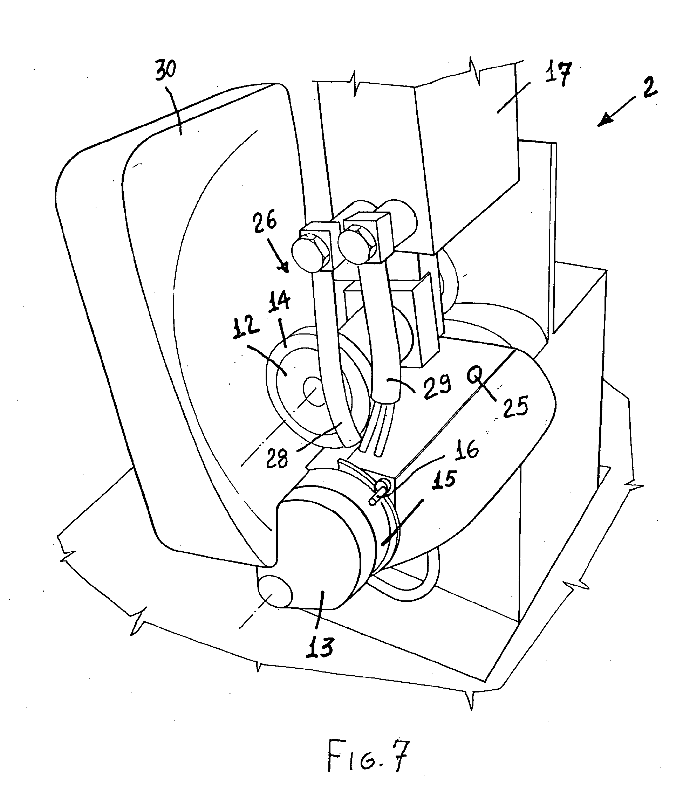

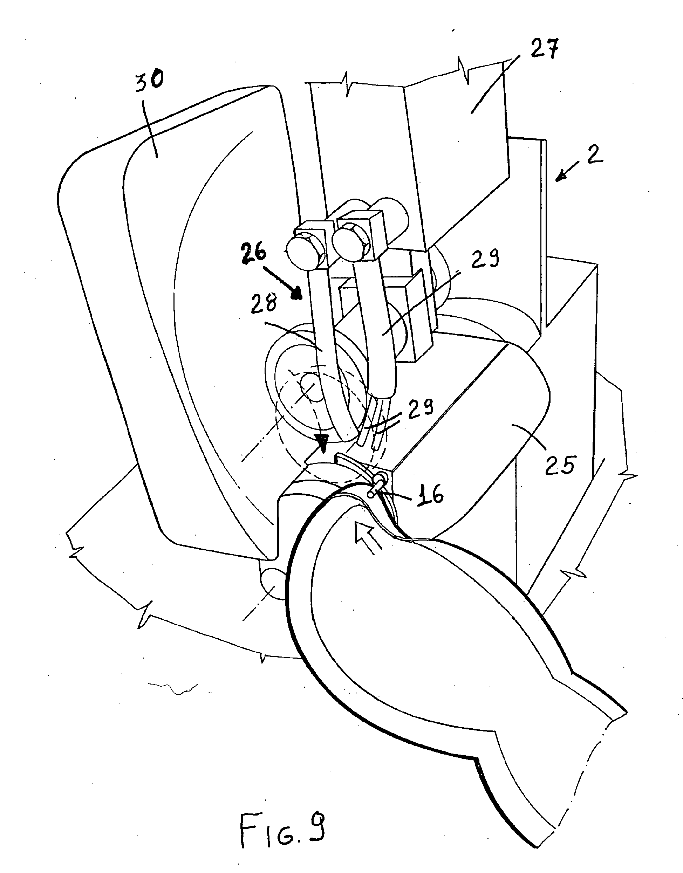

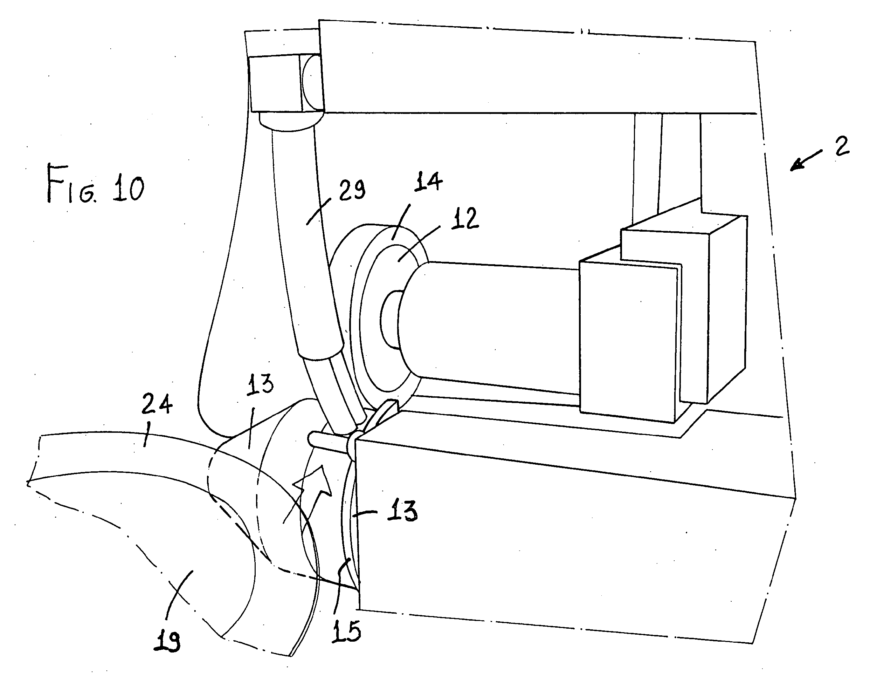

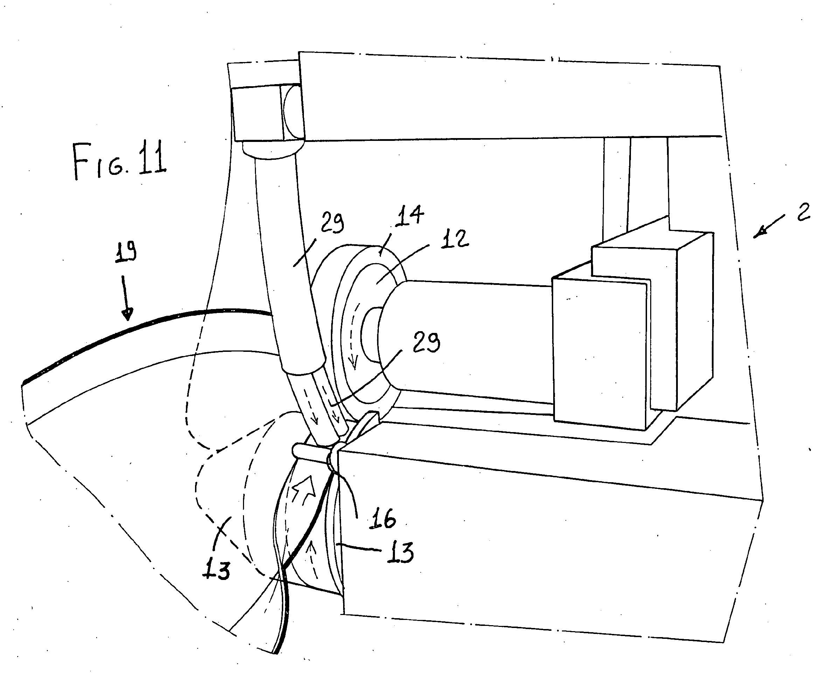

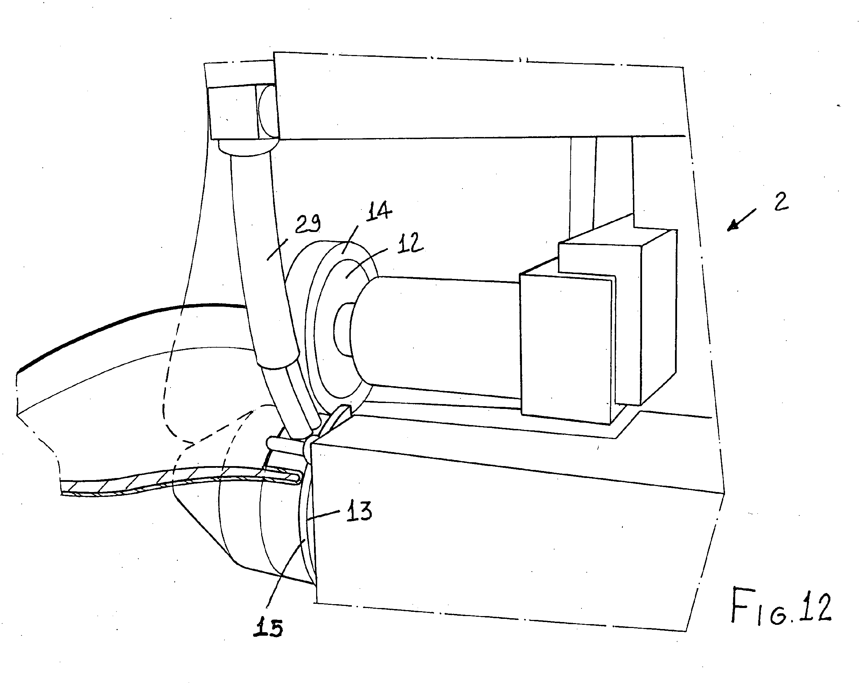

Said apparatus further comprises a second machine for folding and sealing that portion of the textile fabric material on which the adhesive has been applied, said second machine being shown in figures 7 to 12 and generally indicated by the reference number 2.

The machine for applying an adhesive strip 22 on an edge of a textile fabric material, at a variable distance from a reference mark, with a cutting of an exceeding fabric material, comprises a drive assembly including two independent wheels, respectively indicated by the reference numbers 5 and 6, the top wheel 5 of which can swing and provide a variable pressure.

More specifically, the top or upper wheel 5 is supported by a supporting arm 40 and can swing about a pivot pin 41, as driven by a driving piston 42.

The first machine 1 comprises a bobbin 44 on which is wound a strip of an adhesive material 22, coupled to a silicone processed paper material strip.

The exceeding textile fabric material, after having applied the adhesive strip 22 to the article of manufacture to be finished, is cut through and conveyed to a negative pressure duct 43, and being collected in a suitable collecting vessel.

The rotary speeds of said wheels 5 and 6 are independent from one another and programmable.

The wheels 5 and 6 comprise a heat resistant antistatic resilient coating.

The machine further comprises a plurality of cleaning knives for trimming the textile fabric material, and, more specifically a rotary knife 7 and a swinging knife 8 which can swing about a shaft 46, as well as a spacer guide 9, of variable size, operating as a reference guide for the adhesive material.

A further hot guide 11, heated by a heater 11', for pre-heating the adhesive material by conduction through the protective silicone processed paper material being moreover provided.

Said machine 1 further comprises an air conveying circuit for conveying environment temperature air through an air conveying duct 45, for facilitating the supplying of the textile fabric material to be processed.

The machine 2, for folding and sealing the textile fabric material, comprises a wheeled drive unit including two independent and programmable wheels 12 and 13, the top wheel 12 of which can swing with a variable pressure.

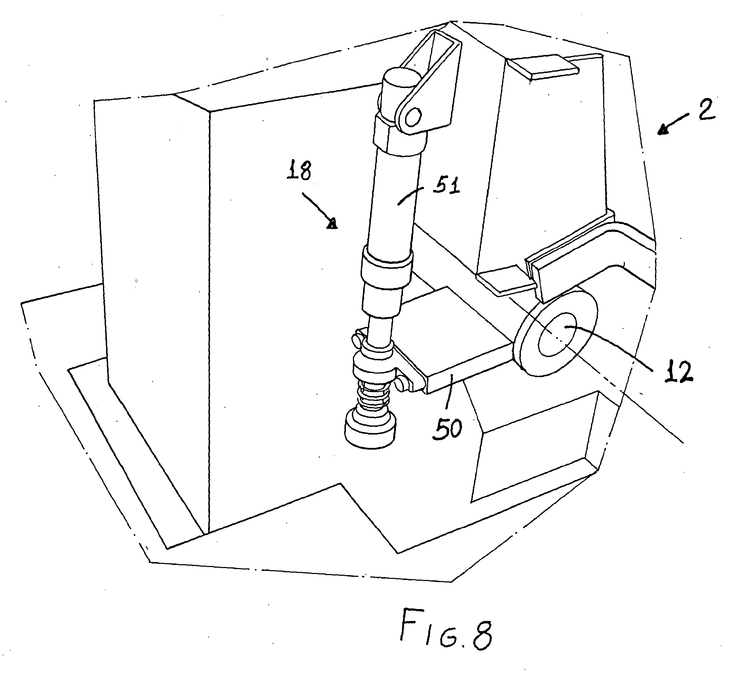

Moreover, the top wheel comprises a raising system, for providing a raising operation with the machine in a stopped or rest condition, said raising system being generally indicated by the reference number 18 and schematically shown in figure 8.

This raising system 18 comprises a pneumatic piston 51 for raising and lowering a bar or lever 50 supporting the top wheel 12.

Said wheels 12 and 13 comprise, each, a resilient coating, respectively indicated by 14 and 15, having antistatic and heat resistance properties.

An eccentric guide 16 is adapted to hem the textile fabric material on supporting elements of different thicknesses and configurations.

An overheated air top heating system 17 allows to melt the adhesive material, independently from the thickness of the underlying material.

The making method according to the present invention comprises essentially four operating steps.

A first applying step consists of applying an adhesive strip, at a fixed but variable-size distance, to a free textile fabric piece, by flush-cutting the latter.

The adhesive is applied with its paper supporting element, by following the piece shape, and cutting away the exceeding fabric material.

The first operating step is carried out by the first above disclosed machine.

A second detaching step for detaching the paper material from the adhesive material and cutting the projecting portions; this operating step essentially comprises a manual type of operation.

A third folding step for folding the textile portion and adhesive thereon and sealing it on the portion to be hemmed; said third step being carried out by the second above disclosed machine.

A fourth optional, operating step consists of removing the basting or temporary fixing system from the outer fabric portion and repeating the first three operating steps, as it will be disclosed in a more detailed manner hereinafter.

A bra cup, generally indicated by the reference number 19 in figure 16, comprises a laminated material, including a textile fabric material and a portion of a foamed plastics material, or a felt material, or any other suitable supporting materials.

These articles of manufactures are laminated and thermoformed so as to assume a tridimensional shape, which must be coated by a fabric material and, finally, subjected to hemming operations.

The outer coating fabric layer, generally indicated by the reference number 20, must be optionally glued to the underlying laminated material, generally indicated by the reference number 21, by using either a permanent or semi-permanent glue.

According to the inventive method, is herein used a semi-permanent glue, to cause the coating layer 20 to adhere to the support layer 21, for a shirt time period, up to a first washing operation.

Another approach is that of non-glueing the outer fabric material to the support material.

In such an approach, the outer fabric material 20 is basted, that is temporary coupled to the support element 21 by a temporary seaming performed at a side of the textile fabric material.

This solution is a technically preferable one, if it is desired to provide an end article of manufacture having good aesthetic features, and devoid of any yellowing phenomenon.

The method according to the present ivention provides, anyhow, that the outer fabric material 20 has a size larger than that of the thermoformed laminated material 21, at the sides or edges thereof to be hemmed, which are usually two or three.

If a hemming operation on two sides must be performed, it is possible to preliminarily perform a definitive clamping or fixing of the outer fabric material on the third side by using either a seam or a hot sealing, while using an adhesive material.

After this operation, the other two sides are finished.

In the case of a hemming on three sides or edges, the outer fabric is fixed or temporarily coupled by a basting or a temporary glueing at a side.

The outer fabric material will have, also in this case, a larger size, to allow the several hemming operations to be easily carried out.

Said operations are carried, at first on two non glued and basted sides.

Then, the temporary basting or glueing is removed, while performing the third hemming operation.

The above mentioned hemming operations can be carried out in a variable number, depending on the shape of the tridimensional article of manufacture to be hemmed.

The hemming operations proper are carried out by applying to the projecting outer textile fabric material 20 a biadhesive material strip 22, supported at the top thereof by a silicone processed paper material strip 23.

The adhesive strip, in particular, is applied to the outer or coating fabric 20 by the above disclosed machine 1, at a preset and variable distance, depending on the thickness of the tridimensional laminated article of manufactures to be hemmed.

The above mentioned adhesive strip 22 is applied to the projecting portions 24 of the outer textile fabric 20, at the sides or edges thereof to be hemmed.

Simultaneously with the application of the adhesive strip 22, the method according to the present invention also provides to use a cutting machine for cutting the outer textile fabric material in a flush relationship with the adhesive material.

Then, said method provides to manually remove the outer silicone processed paper layer 23, while cutting the projecting end portions of the adhesive strip 22 and silicone processed paper material 23.

The trimming operation on the exceeding outer textile fabric material is performed by using the swinging trimming knife 8, cooperating with the bottom circular counter-knife 7, which turns rigidly with the bottom wheel 6.

The adhesive strip 22, supported by the silicone processed paper material 23, is fed into the machine, by passing over the heated guide 11, bringing, by conduction, the adhesive material to a pre-glueing temperature, and being arranged on the underlying textile fabric material immediately before the pressing wheels for applying it.

The outer side 9 of said guide operates as a reference element for a relocating of the adhesive.

By varying the thickness of this outer side, it is possible to change the distance between the tridimensional laminated material and the applied adhesive strip.

This distance variation is necessary to prevent the adhesive from being arranged on the edge of the laminated textile fabric material, which would cause the adhesive to prematurely cure with a self-evident visual defect.

The above disclosed machine comprises moreover a guillotine type of knife 48, which is controlled or driven by a pneumatic piston 49 provided for cutting through the adhesive strip coupled to the siliconized paper.

The textile fabric material folding and sealing machine 2, which represents a main part of the apparatus according to the present invention, is designed for folding the outer or coating textile fabric material through 180° and hot glueing, by a top and side hot air thermosealing, the adhesive material.

Thus, the outer projecting portion 24 of the outer textile fabric material 20 will be folded and sealed to the underlying portion of the tridimensional article of manufacture, thereby forming a hemmed edge.

The above mentioned operations are carried out by the above disclosed machine 2, including the bottom wheel 13, coated by heat resistant resilient plastics coating 15.

Said bottom wheels 13 operates in contact with the top wheel 12, likewise coated by the resilient coating 14.

The top or upper wheel 12 can swing to fit a plurality of different thicknesses of the material to be hemmed.

Moreover, said top wheel 12 can be raised and lowered by a pneumatic raising and lowering piston 18, constituting the raising system proper.

The two above mentioned wheels 12 and 13 are driven by independent and programmable motors.

Thus, said two wheels can be driven with mutually different speeds, depending on the programmed distances, to provide a differential effect on the tridimensional textile fabric material article of manufacture being processed.

This effect is provided by a differential change gear, driven through a pushbutton 25.

The top or upper wheel 12 is supported by a swinging supporting arm about a horizontal shaft, driven by a pneumatic piston 51, at one end portion of said arm 50.

The top or upper swinging wheel 12 can be lowered to provide a pressure on the bottom wheel 13.

This pressure can be changed and suitably adjusted.

Moreover, said top wheel 12 is automatically raised by a pneumatic piston as the machine is stopped, thereby preventing the material being processed from being damaged.

Said machine further comprises the eccentric guide 16, adapted to fold the outer fabric portion on which the adhesive has been applied, before conveying the article of manufacture between the mentioned top and bottom wheels.

Said eccentric guide 16 is arranged on an eccentric shaft and is rotatively driven to adjust the thickness of the material being fed under said guide.

Accordingly, said guide 16 will hem the outer fabric on different thickness and configuration supports.

Said machine comprises moreover an overheated air top heating system 26, for melting the adhesive, independently from the thicknes of the underlying material.

Said machine also comprises a heater 27 for heating air and conveying it through a plurality of conveying ducts 28 and 29 arranged at the feeding regions of the laminated material to be hemmed.

Said air ducts or manifolds heat on the top and sides thereof the adhesive 22 arranged at the side strip on the top fabric, thereby thermomelting the adhesive and properly hemming the article of manufacture.

This last operation, as already disclosed, is performed by folding through 180° the projecting edge contacting the bottom surface of the tridimensional supporting material.

The above disclosed machine comprises moreover a tridimensional template 30, for coupling the bra cups 19.

Said template 30 has been specifically designed for properly performing its provided operation.

The above disclosed operations can involve a partial removal of the basting for temporary fixing the outer fabric.

The above disclosed operations can be carried out on all the sides or edges of the article of manufacture to be hemmed.

It has been found that the invention fully achieves the above mentioned aim and objects.

In practicing the invention, the used materials, as well as the contingent size and shapes can be any, depending on requirements.

## Claims

1. An apparatus for hemming tridimensional textile fabric articles of manufactures, in particular bras, **characterized in that** said apparatus comprises a first adhesive applying machine for applying an adhesive strip on an edge of a textile fabric material, at a variable distance from a reference mark with a cutting of an exceeding textile fabric material, and a second machine for folding and sealing that portion of the textile fabric material on which said adhesive strip has been arranged.

2. An apparatus according to claim 1, **characterized in that** said first machine adapted to apply an adhesive strip of an edge of a textile fabric material at a variable distance from a reference mark, while cutting away an exceeding textile fabric material, comprises a drive unit including two independent wheels, said wheels comprising a top wheel which can swing and provide a variable pressure, said wheels having independent and programmable rotary speeds.

3. An apparatus according to one or more of the preceding claims, **characterized in that** said top wheel is supported by a supporting swinging arm which can swing about a pivot pin as driven by a pneumatic piston.

4. An apparatus according to one or more of the preceding claims, **characterized in that** said apparatus comprises moreover a bobbin on which is wound an adhesive strip coupled to a siliconized paper strip.

5. An apparatus according to one or more of the preceding claims, **characterized in that** the exceeding textile fabric material is cut away after having applied the adhesive strip to the article of manufacture to be made, and being conveyed to a negative pressure duct and collected in a collecting vessel.

6. An apparatus according to one or more of the preceding claims, **characterized in that** said apparatus comprises moreover a cold air flow conveying device, for conveying a cold air flow to facilitate the feeding of said textile fabric material.

7. An apparatus according to one or more of the preceding claims, **characterized in that** said wheels are coated by a heat resistant antistatic elastic coating.

8. An apparatus according to one or more of the preceding claims, **characterized in that** said apparatus comprises moreover a plurality of textile fabric material trimming knives, said knives comprising a rotary knife and a swing knife, said swing knife swinging about a shaft, and a spacer guide, of variable thickness, operating as a reference guide for the adhesive material.

9. An apparatus according to one or more of the preceding claims, **characterized in that** said apparatus comprises a hot guide for preheating said adhesive material by conduction through said protective siliconized paper material.

10. An apparatus according to one or more of the preceding claims, **characterized in that** said second machine for folding and sealing said textile fabric material comprises a drive unit including independent and programmable wheels, said independent and programmable wheels including a top wheel which is a variable pressure swinging wheel.

11. An apparatus according to one or more of the preceding claims, **characterized in that** said top wheel comprises a raising system for raising said top wheel with the machine in a stop condition.

12. An apparatus according to one or more of the preceding claims, **characterized in that** said apparatus comprises moreover an eccentric guide, adapted to hem said textile fabric material on different thickness and configuration supports.

13. An apparatus according to one or more of the preceding claims, **characterized in that** said apparatus comprises moreover an overheated air top heating system causing a melting of said desired material independently from a thickness of an underlying material.

14. An apparatus according to one or more of the preceding claims, **characterized in that** the textile fabric material folding and sealing machine is adapted to fold the outer textile fabric material through 180° and hot glue, by thermomelting, said adhesive material.

15. An apparatus according to one or more of the preceding claims, **characterized in that** the top wheel of the second machine is a swinging top wheel to fit different thicknesses of the material to be hemmed.

16. An apparatus according to one or more of the preceding claims, **characterized in that** said top wheel can be raised and lowered by a pneumatic piston forming a raising system.

17. An apparatus according to one or more of the preceding claims, **characterized in that** said two wheels can assume mutually different peripheral speeds, depending on a plurality of programmed distances, to provide a differential effect on the tridimensional textile article of manufacture being processed, said effect being obtained by using a differential change gear.

18. An apparatus according to one or more of the preceding claims, **characterized in that** said top wheel is supporting by a swinging arm which can swing about a horizontal shaft, and being driven by a pneumatic piston at an end portion of said horizontal shaft.

19. An apparatus according to one or more of the preceding claims, **characterized in that** said top swinging wheel can be lowered thereby providing a variable and adjustable pressure on said bottom wheel.

20. An apparatus according to one or more of the preceding claims, **characterized in that** said top wheel is automatically raised by said pneumatic piston as said machine is stopped, thereby preventing the material being processed from being damaged.

21. An apparatus according to one or more of the preceding claims, **characterized in that** said second machine comprises an eccentric guide allowing an outer fabric portion on which the desired material has been applied to be folded, before conveying the article of manufacture between said top and bottom wheels.

22. An apparatus according to one or more of the preceding claims, **characterized in that** said eccentric guide is arranged on an eccentric shaft and is so turned as to adjust the thickness of the material being fed under said guide.

23. An apparatus according to one or more of the preceding claims, **characterized in that** said guide is adapted to hem said outer fabric on different thickness and configuration supports.

24. An apparatus according to one or more of the preceding claims, **characterized in that** said second machine comprises an overheated air top heating system for melting said adhesive material independently from a thickness of an underlying material.

25. An apparatus according to one or more of the preceding claims, **characterized in that** said second machine comprises a heater for heating air and conveying heated air through a plurality of ducts arranged at feeding regions of the laminated material to be hemmed.

26. An apparatus according to one or more of the preceding claims, **characterized in that** said air ducts heat at the top the adhesive arranged at the side strip of the top textile fabric material, thereby thermomelting said adhesive and hemming said article of manufacture, this latter operation being carried out by folding through 180° the projecting edge contacting the bottom surface of the tridimensional support material.

27. An apparatus according to one or more of the preceding claims, **characterized in that** said second machine comprises a tridimensional template for fitting the cups of a bra.

28. A method for hemming tridimensional textile fabric article of manufactures, **characterized in that** said method comprises the following steps:
a first applying step of an adhesive strip at a fixed distance, but of variable size, to a textile fabric material piece, and flush cutting said textile material piece; applying an adhesive supported by a paper support according to the fabric material piece shape;
a second detaching step for detaching the paper support from the adhesive proper and trimming an end portion thereof;
and a third folding step for folding the textile portion provided with the adhesive material and sealing it on the portion to be hemmed.

29. A method according to the preceding claim, **characterized in that** said method further comprises an optional fourth step consisting of removing a basting or temporary fixing system from the outer fabric and repeating the first three steps.

30. A method according to one or more of the preceding claims, **characterized in that** said method provides to use a semipermanent glue to cause the outer coating air to adhere to the support layer for a short period of time, up to a first washing operation.

31. A method according to one or more of the preceding claims, **characterized in that** said outer fabric layer is glued to said support material and that the outer fabric layer is basted, i.e. temporary coupled, to said support element by a temporary seam performed at a side thereof.

32. A method according to one or more of the preceding claims, **characterized in that** in said method the outer fabric has a size larger than that of the laminated thermoforming material, at the sides to be hemmed, which are usually two or three.

33. A method according to one or more of the preceding claims, **characterized in that**, as a hemming operation on two sides must be performed, it is preliminarily performed a definitive fixing of the outer fabric by a seam or hot sealing, by using an adhesive.

34. A method according to one or more of the preceding claims, **characterized in that**, after the preceding operation, the other two sides are trimmed.

35. A method according to one or more of the preceding claims, **characterized in that**, in a case of a free-side hemming, the outer fabric is fixed by a temporary basting or glueing at a side thereof.

36. A method according to one or more of the preceding claims, **characterized in that** said outer fabric has a larger size to allow the hemming operations to be easily performed.

37. A method according to one or more of the preceding claims, **characterized in that** said hemming operations are performed at first on two non glued and basted sides and then the basting or temporary glueing is removed, by performing the third hemming operation.

38. A method according to one or more of the preceding claims, **characterized in that** said hemming operation can be performed in a variable manner, depending on the shape of the tridimensional article of manufacture to be hemmed.

39. A method according to one or more of the preceding claims, **characterized in that** the hemming operations proper are performed by applying to the projecting outer fabric a biadhesive strip supported on the top by a siliconized paper strip, said adhesive strip being applied to said outer fabric, by said first machine, at a preset and variable distance, depending on a thickness of the tridimensional laminated article of manufacture to be hemmed.

40. A method according to one or more of the preceding claims, **characterized in that** said adhesive strip is applied to projecting portions of said outer fabric at the sides thereof to be hemmed.

41. A method according to one or more of the preceding claims, **characterized in that**, simultaneously with the application of the adhesive, said method provides to use a cutting machine for cutting the outer fabric at an outer flush portion of said adhesive; then the siliconized paper outer layer being manually removed and the projecting end portions of the adhesive strips and siliconized paper being cut away.

42. A method according to one or more of the preceding claims, **characterized in that** the outer exceeding fabric is trimmed by the swinging trimming kinfe cooperating with the bottom circular counter-knife, which rigidly turns with said bottom wheel.

43. A method according to one or more of the preceding claims, **characterized in that** the adhesive strip, supported by said siliconized paper, is fed into said machine by passing through a heated guide which brings by thermal conduction said adhesive to pre-glueing temperature, and being arranged on the underlying fabric immediately before the pressing wheels, providing its application.

44. A method according to one or more of the preceding claims, **characterized in that** said guide has an outer side operating as a reference for rearranging said adhesive and which, by changing the thickness of said side, changes the distance between the tridimensional laminated material and the applied adhesive strip; said distance variation preventing the adhesive from being arranged on the edge of the laminated textile material, to cause a curing thereof and a self-evident visual defect.

45. A method according to one or more of the preceding claims, **characterized in that** the disclosed operations involve a partial removal of the temporary fixing basting for temporarily fixing the outer fabric.

46. A method according to one or more of the preceding claims, **characterized in that** said above disclosed operations are performed on all the sides of the article of manufacture to be hemmed.
